# EUROPÄISCHE PATENTSCHRIFT

(11) **EP 2 264 397 B1**
(45) Veröffentlichungstag und Bekanntmachung des Hinweises auf die Patenterteilung: **07.10.2015**
(21) Anmeldenummer: 10179196.0
(22) Anmeldetag: 19.10.2000
(51) Int. Cl.: G01B 21/24, G01H 1/00, G01B 11/27

(54) **Lagemesssonde zum gegenseitigen Ausrichten von Körpern und Verfahren zum gegenseitigen Ausrichten von Körpern**
Orientation measuring probe for the mutual alignment of bodies and method for the mutual alignment of bodies
Sonde de mesure d'orientation pour aligner de éléments entre eux et procédé utilisée à cet effet

(30) Priorität: 08.12.1999 DE 19959220
(43) Veröffentlichungstag der Anmeldung: 22.12.2010
(62) Teilanmeldung aus: 00122761.0
(73) Patentinhaber: PRÜFTECHNIK Dieter Busch AG, 85737 Ismaning (DE)
(72) Erfinder: Busch, Dieter, 85737, Ismaning (DE)

(56) Entgegenhaltungen:
- WO-A-97/21980
- DE-A1- 4 116 345

## Beschreibung

Die Erfindung betrifft eine Lagemesssonde zum gegenseitigen Ausrichten von Körpern sowie ein Verfahren zur effizienten Anwendung einer solchen Lagemesssonde.

Eine Lagemesssonde der gattungsgemässen Art ist bekannt aus der WO 97/21980. In dieser wird beschrieben, wie das gegenseitige Ausrichten von Körpern, insbesondere das Parallelrichten von Wellen, Walzen oder dgl. dadurch erheblich erleichtert und beschleunigt werden kann, dass mittels einer hochpräzisen Messvorrichtung zunächst eine Referenzrichtung anhand eines ersten Körpers bestimmt wird, und als Vergleichswert in Bezug auf ein geeignetes Koordinatensystem gespeichert werden kann. In einem nachfolgenden Messvorgang wird mit derselben Lagemesssonde die Ausrichtung eines zweiten Körpers in hochpräziser Weise bestimmt, so dass Fehler in der gegenseitigen Ausrichtung solcher Körper dadurch erkannt werden können, dass ein Vergleich, d.h. eine Differenzbildung der erhaltenen Messergebnisse durchgeführt wird. Weitere Körper können in anschliessenden Messungen auf die gleiche Weise kontrolliert werden. In Anschluss an den Vergleich der Messergebnisse kann eine Korrektur der Ausrichtung solcher Körper erfolgen, wobei die Wahl einer geeigneten Referenzrichtung praktisch beliebig ist. Gemäss der WO 97/21980 wird jedoch nicht näher spezifiziert, in welcher Weise das Gerät äusserlich ausgestaltet sein sollte oder welche Randbedingungen bei dessen Bedienung besonders zu beachten sind, um das Verfahren in bestmöglicher und effizientester Weise auszuführen.

Eine weitere Lagemesssonde der gattungsgemässen Art ist bekannt aus der DE 19800901.1, welche aufgrund des dort vorgeschlagenen Messprinzips von besonders kleiner Bauform sein kann und dementsprechend mit einem ergonomisch gestalteten Handgriff zur erleichterten Bedienung versehen sein kann. Trotz der in der DE 19800901.1 dargestellten Verbesserungen fehlt jedoch eine weitergehende Lehre hinsichtlich Vorrichtungsdetails und verfahrensmässigen Besonderheiten, mittels welchen in besonders schneller und effizienter Weise genauestmögliche Messergebnisse erzielt werden können. In der DE 41 16 345 A1 ist ein Verfahren zur Schadensfrüherkennung an Maschinen mittels Körperschallmessung und Auswerten der Leistungsspektern mittels Kreuzkorrelation und Autokorrelation beschrieben.

Es ist Aufgabe der Erfindung, die vorgenannten Unvollkommenheiten in kostengünstiger Weise zu eliminieren und eine Messsonde bereitzustellen, mit welcher gattungsgemässe Messaufgaben mit noch grösserer Genauigkeit abgearbeitet werden können. Diese Aufgabe wird mit einem Verfahren gemäß Anspruch 1 sowie einer Vorrichtungen gemäß Anspruch 3 gelöst. Die Vorrichtung kann geeignet sein, sprachliche Befehle einer Bedienperson entgegenzunehmen und mittels spracherkennender Hard- und Software so zu verarbeiten, dass ein folgerichtiges Umschalten in einen anderen, gewünschten Maschinenzustand bewirkt wird. Weiterhin kann die Vorrichtung ausgestaltet sein, mittels einer Sprachausgabeeinrichtung verständliche Signale zu geben oder ermittelte Messresultate in einer natürlichen Sprache zu artikulieren.

Zum schnelleren und verbesserten Erfassen von interessierenden Messwerten kann die Einrichtung so ausgestaltet sein, dass eine an ergonomisch besonders günstiger Stelle angebrachte Einzeltaste oder Triggereinrichtung vorhanden ist, deren Betätigung mittels Daumen oder Zeigefinger durch eine Bedienperson dazu führt, dass ein einzelner, aktueller Messwert (oder ein aktueller Mittelwert von mehreren Messwerten) abgespeichert wird. Hierzu ist ein elektronischer Speicher vorgesehen.

Weiterhin kann die Vorrichtung so ausgestaltet sein, dass sie eine hochauflösende Anzeigevorrichtung zur Wiedergabe von alphanumerischen oder graphischen Informationen aufweist, anhand welcher eine Bedienperson erkennen kann, ob und in welcher Art an den gerade vermessenen Gegenständen irgendwelche Ausricht- oder andere Korrekturmassnahmen durchzuführen sind.

Die Vorrichtung kann als Komplettgerät verwendbar sein. Sie kann aber auch mit einem extern angeordneten Bedienteil in Verbindung stehen, oder mit einem übergeordneten Leitrechner. Auf diese Weise gelingt es, das Gewicht der zu transportierenden Messsonde zu reduzieren, wodurch das Handling erleichtert wird.

Sofern im Zusammenhang mit einer Messwertnahme durch die genannten Leitrechner oder extern angeordnete Bedienteile einzelne Bedienungs- oder Speicherfunktionen ausgeführt werden, kann es vorteilhaft sein, die vorgesehene Sprachausgabe- oder Spracheingabefunktionen auf diesen Geräten zu lokalisieren, welches zu einer Gewichtseinsparung führen kann. Es kann aber sowohl bei den genannten externen Geräten als auch bei der portierbaren eigentlichen Messsonde solche sprachbasierte Unterstützung vorgesehen sein.

Zur weitestgehenden Verringerung von Messfehlern sieht die Erfindung vor, dass für einen einzelnen Messvorgang ein Mittelwert bestimmt wird, welcher auf mehreren Messwerten beruht, die in einer Sequenz zu unterschiedlichen Zeiten erfasst werden. Die hochpräzise Messung der Orientierung von Messsonde und zu vermessendem Körper kann durch unbeabsichtigte Zusatzbewegungen nachhaltig gestört werden. Die Erfindung sieht daher vor, Vibrationen und andere periodische Bewegungen eines Messobjektes vor einem Messvorgang zu identifizieren. Dadurch kann die genannte Mittelwertbildung dann so durchgeführt werden, dass der Einfluss solcher periodischer Bewegungen, welche von einer technischen Netzfrequenz (16, 50, 60 Hz) oder einem rotierenden Maschinenteil verursacht werden, auf ein Mindestmass limitiert bleibt. Hierzu genügt es gemäss einer ersten Verfahrensweise der Erfindung, dass eine zeitsequentielle Folge einzelner Messwerterfassungen in stochastischer, nichtperiodischer Weise ausgeführt wird, und die einzeln erfassten Messwerte einer Mittelwertbildung zugeführt werden. Die auf diese Weise erhaltenen Mittelwerte sind dann genauer als solche, welche von einer vorherrschenden Körperschallfrequenz zufällig gestört sind. Gemäss der Erfindung kann die Validität eines solchen Mittelwertes dadurch überprüft werden, dass ein zugehöriges Streuungs- oder Varianzmass vordefinierte Grenzwerte nicht überschreitet. Bei Auftreten übergrosser Varianzwerte kann gemäss der Erfindung ein Fehlersignal gegeben werden, oder es wird der errechnete Mittelwert sofort verworfen.

Die der Erfindung zugrunde liegende Aufgabe wird unter Verwendung einer erfindungsgemässen Vorrichtung dadurch gelöst, dass ein Verfahren zum Messen und zur Beurteilung der gegenseitigen Ausrichtung von Körpern angegeben wird, welches folgende Schritte enthält: - Kontaktieren einer Messsonde an einen ersten Körper, welcher eine Referenzfläche oder eine Referenzkante aufweist, - Eingabe eines Befehls durch eine Bedienperson an die Messsonde per Spracheingabe, - bedarfsweises Warten auf ein optisches oder akustisches, insbesondere sprachgebundenes, Quittungssignal, - Kontaktieren der Messsonde an einen zweiten Körper, welcher eine Messfläche oder eine Messkante aufweist, - Eingabe eines weiteren Befehls an die Messsonde per Spracheingabe, -bedarfsweises Warten auf ein optisches oder akustisches, insbesondere sprachgebundenes Quittungssignal, - bedarfsweise Eingabe von Dimensionsdaten, welche die Anordnung oder Distanzen der Gegenstände zueinander beschreiben, mittels einer Tastatur und/oder mittels einer Spracheingabeeinrichtung oder unter Verwendung eines Displays, welches eine geordnete oder strukturierte Eingabe der Dimensionsdaten erleichtert, - Errechnen von geometrischen Daten, welche die gegenseitige Orientierung der Körper in differenzieller Weise beschreiben - Ausgabe von Informationen, insbesondere von Messwert-Informationen, welche Differenzen der Orientierung zwischen erstem und zweitem Körper aufweisen, auf optischer oder akustischer, insbesondere sprachgebundener Basis, an eine Bedienperson - bedarfsweise Ausgabe von Informationen, welche eine Bedienperson in die Lage versetzen können, Korrektur- oder Justagemassnahmen an entweder dem ersten oder dem zweiten Körper auszuführen, so dass die gegenseitige Ausrichtung dieser Körper verbessert wird.

Eine weitere Lösung ergibt sich bei der Anwendung des folgenden Verfahrens zum Messen und zur Beurteilung der gegenseitigen Ausrichtung von Körpern, welches durch folgende Schritte gekennzeichnet ist: - Ermittlung von Körperschallgrössen, welche in der Nähe oder unmittelbar an einer vorgesehenen Messfläche von zu vermessenden Körpern vorhanden sind, - Analyse der Körperschallgrössen nach periodischen und nichtperiodischen Anteilen, - Ermittlung einer Frequenz, welche durch einen Minimalwert der periodischen Anteile der ermittelten und analysierten Körperschallgrössen ausgezeichnet ist, - mehrfache, mittelwertbildende Messwerterfassung zur Darstellung von Orientierungs-Indikationswerten an einem der Körper, mit einer Wiederhol-Frequenz, welcher derjenigen Frequenz entspricht, bei der der Minimalwert der periodischen Anteile an Körperschallgrössen erkannt worden ist, oder mit einem ganzzahligen Bruchteil einer solchen Frequenz.

Die Erfindung wird im Folgenden anhand der in den Zeichnungen dargestellten Beispiele erläutert.

Es zeigt Fig. 1 eine perspektivische Ansicht auf eine erfindungsgemässe Lagemesssonde, welche auf eine zu vermessende Walze aufgesetzt ist, im Zusammenspiel mit einem externen Bedienteil Fig. 2 eine vergrösserte Darstellung einer Lagemesssonde, welche mit einem Display ausgestattet ist Fig. 3 ein Beispiel eines an einem Messort existierenden Körperschall-Frequenzspektrums.

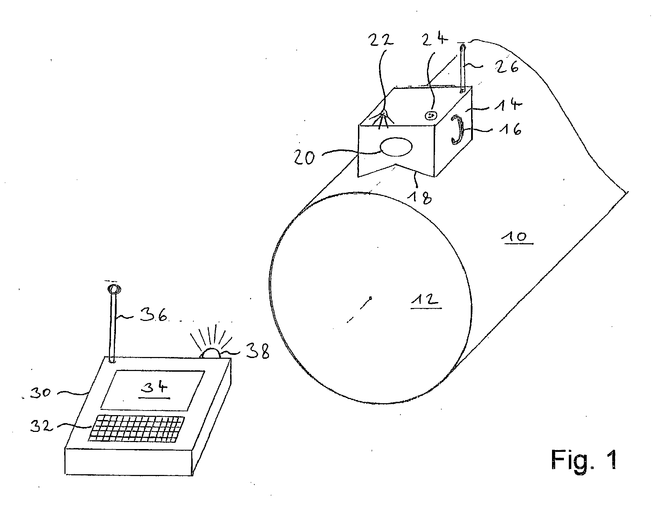

Die in Fig. 1 gezeigte Messsonde 14 ist geeignet, ihre inertiale Orientierung im Raum, oder bezüglich eines Laborkoordinatensystems, kontinuierlich festzustellen. Dazu besitzt sie zumindest zwei optische Kreisel samt zugehöriger Elektronik (nicht gezeigt), wie dies an sich bekannt ist. Die Messsonde 14 ist mit Vorteil so eingerichtet, dass sie die durch die Erdrotation verursachte Drehbewegung kompensiert, mittels einer Technologie, welche ebenfalls an sich bekannt ist. Wie in Fig. 1 gezeigt, wird die Messsonde 14 z.B. mit ihrer prismenförmigen Gehäuseoberfläche auf die Oberfläche einer Walze 10 aufgesetzt und bestimmt so deren Orientierung gegenüber drei Winkelkoordinaten des Raumes. Diese Winkelkoordinaten werden englischsprachig auch mit pitch, yaw und roll bezeichnet. Zum Aufsetzen der Messsonde auf zu vermessende Oberflächen sind Griffe vorgesehen, von denen beispielsweise Griff 16 gezeigt ist. Die Messsonde 14 kann entweder autonom die durch die optischen Kreisel gewonnenen Signale verarbeiten, oder es kann dieses durch einen extern, insbesondere einen tragbaren oder verfahrbaren Rechner oder Bedieneinheit 30 durchführen lassen. (Dieser Rechner weist zumindest eine Anzeigeeinheit 34 und eine Eingabevorrichtung 32 auf, z.B. in Form einer Tastatur). Es kann vorgesehen sein, dass mindestens eine, bevorzugt zwei drahtlose Datenübertragungseinrichtungen vorhanden sind, von denen eine in die Messsonde 14 eingebaut ist. Eine weitere kann im Rechner 30 vorgesehen sein. Bezugsziffern 22, 38 zeigen zugehörige Transponder-Einrichtungen, mit denen eine Datenübertragung auf optischem Wege möglich ist, z.B. mittels infrarot arbeitender Datenübertragungsanlagen. Hierzu kann mit Vorteil ein Datenübertragungsprotokoll verwendet werden, wie es gemäss der sogenannten IRDA-Schnittstelle definiert ist. Eine schnellere Datenübertragung kann mittels der sogenannten USB-Schnittstelle durchgeführt werden, welche nicht nur drahtgebunden, sondern auch in drahtloser Ausführung angeboten wird.

Anstelle der lichtoptisch wirkenden Datenübertragung kann alternativ oder zusätzlich eine radiofrequente Datenübertragung vorgesehen sein. Hierzu zeigt Fig. 1 die als Transponderelemente wirkenden Antennen 26 und 36, deren Sendefrequenzen bevorzugt in verfügbaren Gigahertz-Bändern liegen. Wenn es darauf ankommt, die Baugrösse der Messsonde 14 besonders klein zu halten, wird die Antenne 26 in den Griff 16 integriert.

Es kann vorgesehen sein, die Arbeit einer Bedienperson in umfangreicher Weise dadurch zu erleichtern, dass Kommandos an die Messsonde per Spracheingabe erfolgen können. Dies ist besonders dann hilfreich, wenn die relativ empfindliche und kostspielige Messsonde 14 dadurch vor versehentlichen Stössen geschützt werden soll, dass eine Bedienperson das Gerät ständig mit zumindest einer Hand führt, sofern es sich nicht in einer Parkposition befindet. Zum Zwecke der Spracheingabe ist ein Mikrofon 24 in die Messsonde integriert. Zusätzlich kann eine Bedienerführung per Sprachausgabe vorgesehen sein, welche eine Bedienperson auffordern kann, eine Messung zu wiederholen, ein Bereitschaftssignal auszugeben, Angaben zur aktuellen Qualität der Messergebnisse zu machen, und vergleichbare Informationen. Zu diesem Zweck ist ein Lautsprecher 20 vorgesehen. Dieser kann bei lauten Umgebungsgeräuschen durch einen Kopfhörer ersetzt werden (nicht gezeigt).

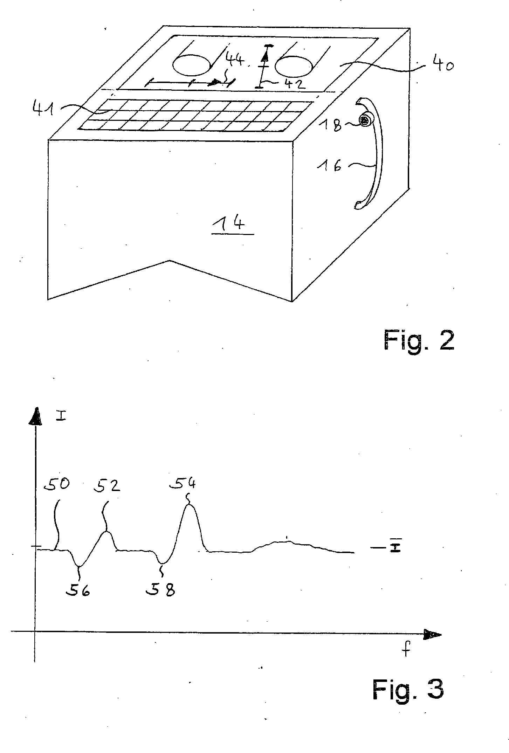

Die Messsonde 14 kann weiterhin eine Anzeigevorrichtung (Display) 40 enthalten, mit welchem Messergebnisse visualisiert werden können. Dies können nicht nur numerische Kennwerte sein, welche angeben, ob und in welchem Umfange eine Fehlausrichtung einer zu vermessende Walze oder dgl. vorliegt, sondern insbesondere zusätzliche in graphischer Form angezeigte Werte. Diese können auch zusätzliche Informationen enthalten, auf welche Weise eine bestmögliche Korrektur eines aufgefundenen Fehlwinkels möglich ist. Wie Fig. 2 zeigt, können zum Beispiel auf dem Display 40 sogenannte Bar-Graphs oder vergleichbare Visualisierungs-Elemente vorgesehen sein. Bar-Graph 44 weist Grösse und Richtung einer aktuell vorhandenen Fehlausrichtung eines vermessenen Körpers in Azimut aus, während Bar-Graph 42 ein ähnliches Messergebnis für die Elevation angibt. Um in bequemer Weise den Beginn oder das Ende eines Mess-Zeitraumes zu signalisieren, kann ein Taster 18 vorgesehen sein, sofern das Gerät nicht über die vorher beschriebene Spracheingabe-Möglichkeit verfügt.

Das in Fig. 3 dargestellte akustische Spektrum bezieht sich auf Vibrationen und Körperschallschwingungen, wie sie an einem vorgesehenen Messort mittels geeigneter Geräte erfasst werden, an dem eine Messsonde aufgesetzt wird oder werden soll. Es wird die Intensität I der Schwingungsgeschwindigkeit über die Frequenz f dargestellt. Sofern solche Vibrationen ein gewisses Mass überschreiten, können sie als Fehlergrösse in ein mittels der Messsonde erhaltenes Messergebnis eingehen. Das in Fig. 3 dargestellte Spektrum weist zum Beispiel einen niederfrequenten Anteil 50 auf, welcher in der Nähe eines Mittelwertes, der als Bezugszeichen den überstrichenen Grossbuchstaben I trägt, liegt. Weiterhin dargestellt sind Maxima 52, 54 des Spektrums sowie weniger stark in Erscheinung tretende Anteile 56, 58. Gemäss der Erfindung wird der genannte Fehlereinfluss dadurch reduziert, dass nicht nur ein einzelner Messwert zur Bestimmung der Lage und Orientierung einer Messsonde herangezogen wird, sondern mehrere von diesen, welche zu einem Mittelwert zusammengefasst werden. Dies stellt eine erste Massnahme zur Reduzierung des genannten Fehlers dar, durch welche gleichzeitig weitere Fehlereinflüsse verringert werden. Erfindungsgemäss ist es jedoch wichtig, die Erfassung der mehreren Messwerte in solchen Zeitabständen vorzunehmen, dass keine Synchronisationserscheinungen mit einer vorherrschenden Körperschallschwingung eintreten. Dies wird dadurch erreicht, dass die Erfassung einzelner Messwerte in stochastischer Weise erfolgt, d.h. gezielt unregelmässig und mit zufälligen Zeitabständen zwischen den Messungen.

## Patentansprüche

1. Verfahren zum Messen und zur Beurteilung der gegenseitigen Ausrichtung von Körpern (12), beeinhaltend: Kontaktieren einer Messsonde an die Körper, Errechnen von geometrischen Daten, welche die gegenseitige Orientierung der Körper in differenzieller Weise beschreiben, und Ausgabe von Informationen, welche Differenzen der Orientierung zwischen den Körpern aufweisen,
**dadurch gekennzeichnet, dass** eine mittelwertbildende Messwerterfassung zur Darstellung von Orientierungs-Indikationswerten (42, 44) an einem der Körper (12) in stochastischer Sequenz erfolgt, so dass die zeitlichen Abstände der Messwerterfassungen regellos verteilt sind oder einer vorgegebenen stochastischen Verteilung gehorchen.

2. Vorrichtung zum Messen und zur Beurteilung der gegenseitigen Ausrichtung von Körpern (12), mit einer Messsonde zum Kontaktieren an die Körper **dadurch gekennzeichnet, dass** die Vorrichtung ausgebildet ist, eine zeitsequentielle Folge von Messwerterfassungen zur Feststellung der Orientierung der Körper in stochastischer, nicht-periodischer Weise auszuführen.

## Claims

1. Method for measuring and for assessing the mutual alignment of bodies (12), comprising: placing a measurement probe in contact with the bodies, calculating geometrical data which describe the mutual orientation of the bodies in a differential fashion, and outputting information which includes the differences in the orientation between the bodies, **characterized in that** an averaging measured value acquisition is performed in order to display orientation indication values (42, 44) on one of the bodies (12) in a stochastic sequence, so that the time intervals of the measured value acquisitions are randomly distributed or reflect a prescribed stochastic distribution.

2. Device for measuring and for assessing the mutual alignment of bodies (12), having a measurement probe for making contact with the bodies, **characterized in that** the device is designed to execute a time-sequential sequence of measured value acquisitions in order to determine the orientation of the bodies in a stochastic, non-periodic way.

## Revendications

1. Procédé de mesure et d'évaluation de l'orientation mutuelle de corps (12), comprenant : la mise en contact d'une sonde de mesure avec les corps, le calcul de données géométriques qui décrivent l'orientation mutuelle des corps de manière différentielle, et la fourniture d'informations qui présentent des différences d'orientation entre les corps,
**caractérisé en ce qu'**une détection de valeurs de mesure produisant une valeur moyenne pour représenter des valeurs indiquant l'orientation (42, 44) est réalisée au niveau de l'un des corps (12) dans une séquence stochastique de telle sorte que les intervalles temporels des détections de valeurs de mesure soient répartis sans règle ou obéissent à une répartition stochastique prédéfinie.

2. Dispositif de mesure et d'évaluation de l'orientation mutuelle de corps (12), comprenant une sonde de mesure pour la mise en contact avec les corps, **caractérisé en ce que** le dispositif est réalisé pour effectuer une succession séquentielle dans le temps de détections de valeurs de mesure pour établir l'orientation des corps de manière stochastique non périodique.
